# EUROPÄISCHE PATENTANMELDUNG

(11) **EP 1 878 859 A2**
(43) Veröffentlichungstag der Anmeldung: **16.01.2008**
(21) Anmeldenummer: 07109492.4
(22) Anmeldetag: 04.06.2007
(51) Int. Cl.: E04H 17/14, F16B 7/18

(54) **Verbindungselement für Zaunriegel und Zaunpfosten**

(30) Priorität: 13.07.2006 DE 202006010895 U
(71) Anmelder: Gust. Alberts GmbH & Co. KG, 58849 Herscheid (DE)
(72) Erfinder: Alberts, Dietrich, 58849, Herscheid (DE)
(74) Vertreter: Beckmann, Jürgen

(57) **Zusammenfassung**

Die Erfindung betrifft Verbindungselemente zur Verbindung von sich entlang einer Querachse (Q) bzw. einer dazu im Wesentlichen senkrechten Hochachse (H) erstreckenden Streben, z. B. Rundhölzern oder Halbrundhölzern. Bei einer speziellen Ausführungsform eines solchen Verbindungselementes (100) weist dieses auf: (a) einen (ebenen oder gewölbten) Querflansch (QF), (b) einen Hochflansch (HF), welcher außerhalb der Ebene des Querflansches liegt und um die Hochachse (H) gewölbt ist, (c) einen Übergangssteg (U), welcher eine Kante des Querflansches (QF) mit einer Kante des Hochflansches (HF) verbindet, wobei diese verbundene Kante des Hochflansches einen größeren Abstand zur Querachse (Q) hat als die ihr gegenüberliegende freie Kante (K2) des Hochflansches. Bei einer anderen Ausführungsform sind zwei ebene Querflansche mit einem gewölbten Hochflansch verbunden.

## Beschreibung

Die Erfindung betrifft ein Verbindungselement zur Verbindung von sich im Wesentlichen senkrecht zueinander erstreckenden Streben, insbesondere von einem Zaunpfosten mit einem quer dazu verlaufenden Zaunriegel.

Bei der Herstellung eines Zaunes aus Rundhölzern, d. h. im Querschnitt runden Zaunpfosten und Zaunriegeln, berühren sich Pfosten und Riegel nur punktförmig, so dass ihr direktes Verschrauben zu sehr instabilen Verbindungen führt. Zudem müssen die Schrauben quer durch den kompletten Durchmesser des Rundholzes getrieben werden.

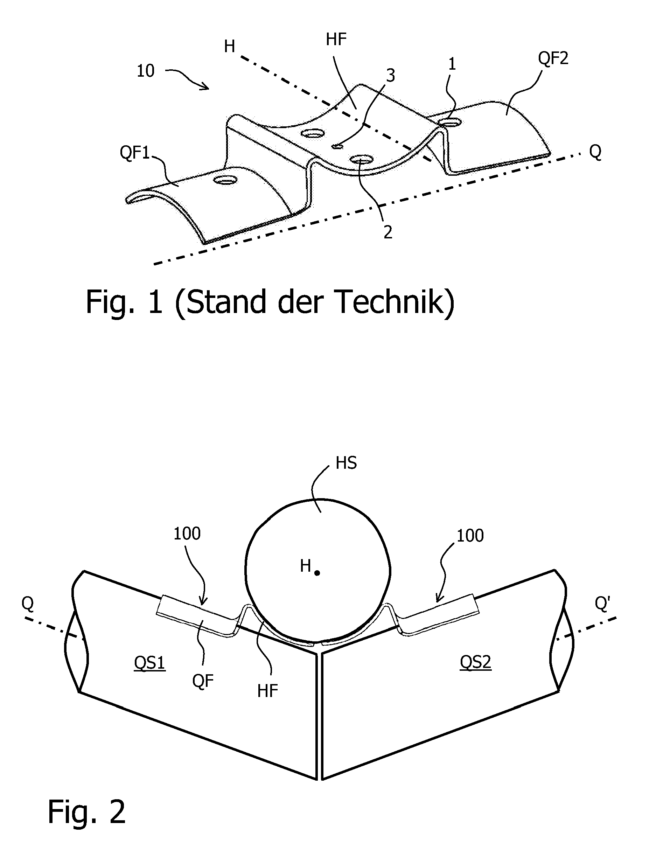

Um leichter herstellbare und stabilere Verbindungen zu ermöglichen, sind in diesem Zusammenhang aus dem Produktprogramm der Firma Gust. Alberts GmbH & Co. KG (Herscheid, Deutschland) Verbindungselemente der in Figur 1 gezeigten Art bekannt, welche aus zwei um eine Querachse Q zylindrisch gewölbten Querflanschen QF1 und QF2 sowie einem dazwischen angeordneten, um eine zur Querachse Q senkrechte Hochachse H gewölbten Hochflansch HF bestehen, wobei die Querflansche und der Hochflansch sich in verschiedenen Ebenen erstrecken. Typischerweise wird zunächst der Hochflansch HF unter Verwendung von Schraublöchern 2 bzw. Nagellöchern 3 an einem senkrechten, runden Zaunpfosten (nicht dargestellt) befestigt. Sodann wird ein sich entlang der Querachse Q horizontal erstreckender, runder Zaunriegel (nicht dargestellt) in die Schalen der Querflansche QF1, QF2 gelegt und unter Verwendung zugehöriger Schraublöcher 1 befestigt. Optional können auch zwei Zaunriegel stirnseitig aneinanderstoßend in jeweils einen der Querflansche QF1 bzw. QF2 gelegt und daran befestigt werden.

Des Weiteren sind aus der EP 1 211 368 A1 schellenartige Elemente bekannt, bei denen ein U-förmiger Mittelflansch für einen Rundpfosten an seinen Enden durch zwei flache Flansche zur Befestigung einer flachen Latte fortgesetzt wird.

Vor diesem Hintergrund bestand die Aufgabe der Erfindung darin, Verbindungselemente der eingangs genannten Art bereitzustellen, die einen breiteren Einsatzbereich in Bezug auf die herstellbaren Zaungeometrien und/oder die verwendbaren Streben haben.

Diese Aufgabe wird durch ein Verbindungselement mit den Merkmalen des Anspruchs 1 bzw. des Anspruchs 2 gelöst. Vorteilhafte Ausgestaltungen sind in den Unteransprüchen enthalten.

Gemäß ihrem ersten Aspekt betrifft die Erfindung ein Verbindungselement zur Verbindung von sich entlang einer Querachse bzw. einer dazu im Wesentlichen senkrechten Hochachse erstreckenden Streben, wobei die Ausdrücke "Querachse" und "Hochachse" grundsätzlich willkürlich gewählt bzw. zugeordnet sind. In einem typischen Anwendungsfall sind die Streben ein Zaunpfosten und ein dazu senkrechter Zaunriegel, wobei sich der Zaunpfosten entlang einer vertikalen Hochachse und der Riegel entlang einer horizontalen Querachse erstreckt. Das Verbindungselement besteht aus den folgenden drei Komponenten:
a) Einem einzigen Querflansch, welcher optional eben oder um die Querachse zylinderförmig gewölbt ist. Hier und im Folgenden haben dabei "zylinderförmig gewölbte Flansche" definitionsgemäß in etwa die Form eines Ausschnittes aus einem Zylindermantel, wobei sich der Ausschnitt in Umfangsrichtung gesehen über typischerweise 40° bis 130° erstreckt. Der Zylinderradius ist entsprechend dem Radius der anzubringenden Rundhölzer gewählt und kann beispielsweise 100 mm betragen.
b) Einem Hochflansch, welcher außerhalb der Ebene des Querflansches liegt und um die Hochachse zylinderförmig gewölbt ist. Dass der Hochflansch außerhalb der Ebene des Querflansches liegt, hat funktional zur Folge, dass ein am Querflansch passend anliegender (durchgehender) Zaunriegel nicht an den Hochflansch anstoßen kann. In Zusammenhang mit gekrümmten Flanschen soll dabei unter der "Ebene des Flansches" eine den Flansch in seinem Flächen-Mittelpunkt berührende Tangentialebene verstanden werden.
c) Einem Übergangssteg, welcher eine Kante des Querflansches mit einer Kante des Hochflansches verbindet, wobei der Übergangssteg typischerweise senkrecht zur Ebene des Querflansches und des Hochflansches steht. Des Weiteren soll die mit dem Übergangssteg verbundene Kante des Hochflansches einen größeren Abstand zur Querachse haben als die ihr gegenüberliegende freie Kante des Hochflansches.

Das beschriebene Verbindungselement mit nur einem Querflansch hat den Vorteil, dass es in End- bzw. Eckbereichen eines Zaunes eingesetzt werden kann, da nur ein Riegel bzw. Riegelende an dem Querflansch befestigt werden muss. Wenn zwei derartige Verbindungselemente verwendet werden, können dann an einem Zaunpfosten zwei Riegel in einem breiten Bereich von verschiedenen Winkeln angebracht werden. Die in c) beschriebene spezielle Ausgestaltung des Hochflansches ermöglicht dabei insbesondere auch die Realisierung sehr großer, stumpfer Winkel, bei welchen sich die Hochflansche von den beiden Verbindungselementen sehr nahe kommen bzw. berühren. Des Weiteren ist zu beachten, dass einer der Querflansche auch eben sein kann, so dass hieran Streben mit einer ebenen Fläche wie beispielsweise Kanthölzer oder halbrunde Hölzer angebracht werden können (wobei ein "halbrundes Holz" definitionsgemäß einen halbkreisförmigen Querschnitt aufweist).

Gemäß einem zweiten Aspekt betrifft die Erfindung ein Verbindungselement zur Verbindung von sich entlang einer Querachse bzw. einer dazu im Wesentlichen senkrechten Hochachse erstreckenden Streben, wobei die Hochachse und die Querachse auf verschiedenen Seiten des Verbindungselementes liegen. Das Verbindungselement besteht aus den folgenden Komponenten:
a) Einem ersten und einem zweiten ebenen Querflansch.
b) Einem Hochflansch, welcher außerhalb der Ebene der genannten Querflansche liegt und um die Hochachse zylinderförmig gewölbt ist.
c) Einem ersten und einem zweiten Übergangssteg, welche den Hochflansch mit dem ersten bzw. zweiten Querflansch verbinden.

Das vorstehend beschriebene Verbindungselement kombiniert einen zylinderförmig gewölbten Hochflansch mit zwei ebenen Querflanschen und ermöglicht damit beispielsweise die Anbringung von Halbrundhölzern oder Kanthölzern an runden Zaunpfosten. Gerade bei der Verwendung von halbrunden Riegeln lässt sich ein Zaunaufbau verwirklichen, welcher bei geringerem Materialverbrauch gleichzeitig eine höhere Stabilität (aufgrund des geringeren Kippmomentes von Halbrundhölzern) erreicht. Da die Hochachse und die Querachse auf verschiedenen Seiten des Verbindungselementes liegen und der Hochflansch um die Hochachse gewölbt ist, kommt das Verbindungselement im montierten Zustand zwischen den verbundenen Streben zu liegen. Der Abstand zwischen den verbundenen Streben beträgt daher immer ein durch die Dimensionen des Verbindungselementes festgelegtes Optimum und ist nicht abhängig vom Durchmesser oder der Form (z. B. rund oder halbrund) der am Hochflansch befestigten Strebe.

Gemäß einer Weiterbildung der oben beschriebenen Verbindungselemente kann der eine bzw. kann mindestens einer der beiden Querflansche an seiner nicht mit einem Übergangsschenkel verbundenen Seite abgerundet ausgebildet sein. Eine solche Abrundung kann insbesondere dann vorgesehen werden, wenn der Querflansch eben ist, da in diesem Falle eine Strebe mit einer ebenen Fläche (Kantholz oder Halbrundholz) unter verschiedenen Winkeln am Querflansch befestigt werden kann. Der runde Grundriss des Querflansches verhindert dann, dass Ecken des Flansches bei bestimmten Winkelstellungen über die angebrachte Strebe hinausstehen.

Die Querflansche bzw. Hochflansche der beschriebenen Verbindungselemente enthalten vorzugsweise mindestens je ein Schraubloch, so dass der entsprechende Flansch an einer Strebe festgeschraubt oder genagelt werden kann.

Im Folgenden wird die Erfindung mit Hilfe der Figuren beispielhaft erläutert. Es zeigt:
- Figur 1: perspektivisch ein Verbindungselement nach dem Stand der Technik mit zwei gewölbten Querflanschen;
- Figur 2: eine schematische Darstellung einer unter Verwendung von zwei Verbindungselementen gemäß Figur 3 hergestellten Zaunecke;
- Figur 3: ein Verbindungselement gemäß dem ersten Aspekt der Erfindung mit einem einzigen gewölbten Querflansch;
- Figur 4: eine Seitenansicht (A), eine Frontansicht (B) und eine Aufsicht (C) des Verbindungselementes von Figur 3;
- Figur 5: eine perspektivische Ansicht eines Verbindungselementes mit einem einzigen ebenen Querflansch;
- Figur 6: eine Seitenansicht (A) und eine Aufsicht (B) des Verbindungselementes von Figur 5;
- Figur 7: eine perspektivische Ansicht eines Verbindungselementes gemäß dem zweiten Aspekt der Erfindung mit zwei ebenen, abgerundeten Querflanschen;
- Figur 8: eine Seitenansicht (A) und eine Aufsicht (B) des Verbindungselementes von Figur 7.

Soweit die Figuren (in der Einheit mm) vermaßt sind, ist dies nur beispielhaft zu verstehen.

Figur 1 zeigt wie eingangs bereits erläutert ein aus dem Stand der Technik bekanntes Verbindungselement 10 mit zwei um eine Querachse Q zylindrisch gewölbten Querflanschen QF1 und QF2, zwischen denen ein zylindrisch um eine Hochachse H gewölbter Hochflansch HF angeordnet ist, wobei die Querachse Q und die Hochachse H im Wesentlichen senkrecht zueinander stehen. Ferner liegen die Querflansche QF1 und QF2 sowie der Hochflansch HF in zueinander versetzten Ebenen (bzw. genauer gesagt in zueinander versetzten Schichten). Schraublöcher 1, 2 bzw. Nagellöcher 3 in den Querflanschen und dem Hochflansch können zur Befestigung der Flansche an entsprechenden Rundhölzern verwendet werden.

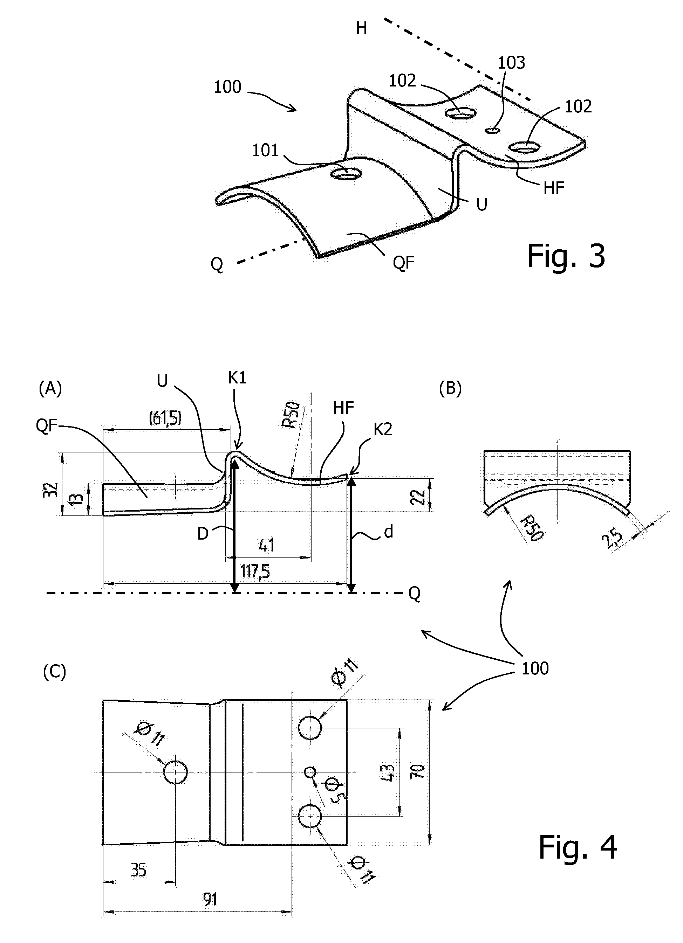

Die Figuren 3 und 4 zeigen demgegenüber ein erstes erfindungsgemäßes Verbindungselement 100, wobei identische bzw. nur um den Wert 100 differierende Bezugszeichen in sämtlichen Figuren ähnliche Komponenten bezeichnen sollen. Das Verbindungselement 100 besteht aus einem zylindrisch um eine Querachse Q gewölbten Querflansch QF mit einem Schraubloch 101, welcher an einer Kante eines senkrecht zur ihm stehenden Übergangssteges U befestigt ist. An der anderen Kante dieses Übergangssteges U ist eine Kante K1 eines zylindrisch um eine Hochachse H gewölbten Hochflansches HF befestigt, wobei der Hochflansch Schraublöcher 102 bzw. ein Nagelloch 103 aufweist.

Wie aus Ansicht A von Figur 4 gut erkennbar ist, ist die Ausbildung des Hochflansches HF asymmetrisch in dem Sinne, dass der Abstand D seiner mit dem Übergangssteg U verbundenen Kante K1 von der Querachse Q größer ist als der Abstand d der gegenüberliegenden freien Kante K2 von der Querachse Q.

Figur 2 zeigt diesbezüglich eine Aufsicht auf eine Zaunecke, welche unter Verwendung von zwei Verbindungselementen 100 nach Figur 3 und 4 hergestellt ist. Die Hochflansche HF dieser Verbindungselemente sind hier an einer Hochstrebe HS (Zaunpfosten) befestigt, während die zugehörigen Querflansche QF an einer ersten bzw. zweiten Querstrebe QS1 bzw. QS2 (Zaunriegel) befestigt sind. Aufgrund der asymmetrischen Ausbildung der Hochflansche ist dabei die Realisierung von sehr stumpfen Winkeln möglich, wobei der größte einstellbare Winkel durch das Aneinanderstoßen der beiden Hochflansche HF gegeben ist. Des Weiteren ist in der Figur erkennbar, dass ein Gehrungsschnitt an den Querstreben QS1 bzw. QS2 auch dann angebracht werden kann, wenn an der Strebe bereits das Verbindungselement 100 befestigt ist, da die zugehörige Hochflansch HF einem Sägeblatt nicht im Wege steht.

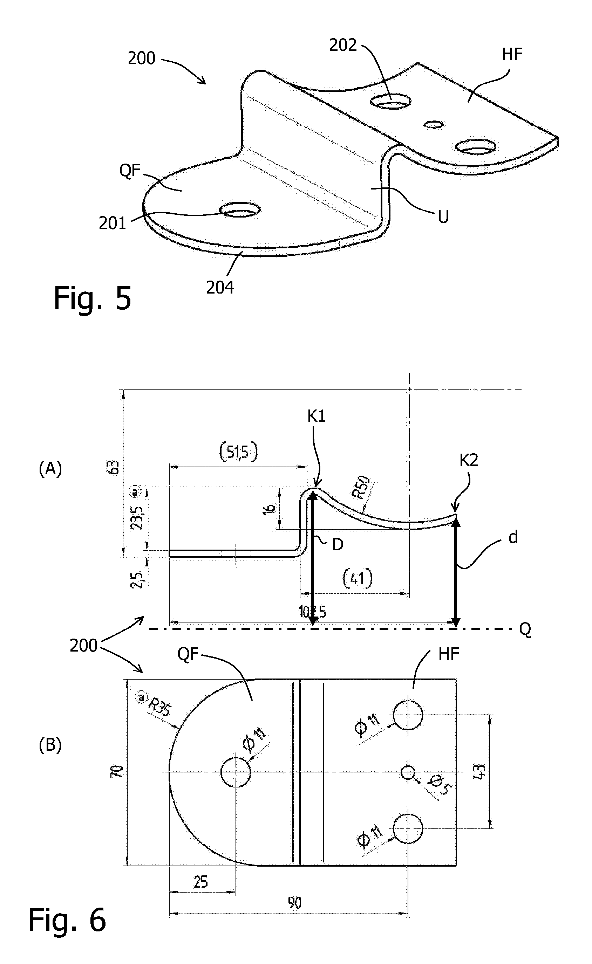

Die Figuren 5 und 6 zeigen ein Verbindungselement 200, welches eine Abwandlung des Verbindungselementes 100 der Figuren 3 und 4 darstellt. Im Gegensatz zu Letzterem ist bei dem Verbindungselement 200 der Querflansch QF eben ausgebildet, so dass er an einer ebenen Fläche beispielsweise eines Kantholzes bzw. eines Halbrundholzes befestigt werden kann. Des Weiteren ist erkennbar, dass der nicht mit dem Übergangssteg U verbundene Rand 204 des Querflansches QF (halb-)kreisförmig ausgebildet ist. Dies erlaubt es, Querstreben unter verschiedenen Winkeln am Querflansch zu befestigen, ohne dass Ecken des Querflansches überstehen würden.

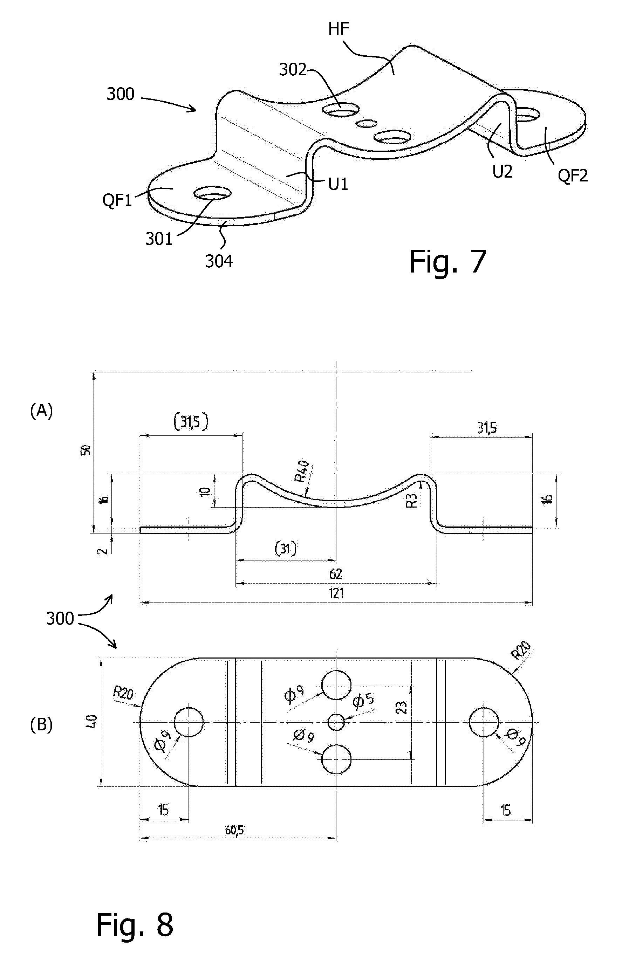

In den Figuren 7 und 8 ist ein weiteres Verbindungselement 300 dargestellt, welches entsprechend dem Verbindungselement 10 von Figur 1 zwei Querflansche QF1 und QF2 aufweist, wobei diese jedoch eben und im Grundriss (halb-)rund ausgebildet sind. Daher kann das Verbindungselement 300 an ebenen Flächen (z. B. von Kanthölzern, Halbrundhölzern) befestigt werden, wobei die zugehörigen Streben vorteilhafterweise unter verschiedenen Winkeln angebracht werden können.

## Patentansprüche

1. Verbindungselement (100, 200) zur Verbindung von sich entlang einer Querachse (Q, Q') bzw. einer dazu im Wesentlichen senkrechten Hochachse (H) erstreckenden Streben (QS1, QS2, HS), bestehend aus:
a) einem Querflansch (QF), welcher eben ist oder um die Querachse (Q) gewölbt ist;
b) einem Hochflansch (HF), welcher außerhalb der Ebene des Querflansches liegt und um die Hochachse (H) gewölbt ist;
c) einem Übergangssteg (U), welcher eine Kante des Querflansches (QF) mit einer Kante (K1) des Hochflansches (HF) verbindet, wobei diese verbundene Kante (K1) des Hochflansches einen größeren Abstand (D) zur Querachse (Q) hat als die ihr gegenüberliegende freie Kante (K2) des Hochflansches.

2. Verbindungselement (300) zur Verbindung von sich entlang einer Querachse (Q) bzw. einer dazu im Wesentlichen senkrechten Hochachse (H) erstreckenden Streben, wobei die Hochachse und die Querachse auf verschiedenen Seiten des Verbindungselementes liegen, bestehend aus:
a) einem ersten und einem zweiten ebenen Querflansch (QF1, QF2);
b) einem Hochflansch (HF), welcher außerhalb der Ebenen der Querflansche (QF1, QF2) liegt und um die Hochachse (H) gewölbt ist;
c) einem ersten und einem zweiten Übergangssteg (U1, U2), welche den Hochflansch mit dem ersten bzw. zweiten Querflansch verbinden.

3. Verbindungselement nach Anspruch 1 oder 2,
**dadurch gekennzeichnet, dass** mindestens ein Querflansch (QF, QF1, QF2) an seiner nicht mit einem Übergangssteg (U, U1, U2) verbundenen Seite (204, 304) abgerundet ausgebildet ist.

4. Verbindungselement nach mindestens einem der Ansprüche 1 bis 3,
**dadurch gekennzeichnet, dass** mindestens ein Querflansch (QF, QF1, QF2) mindestens ein Schraubloch (101, 201, 301) aufweist.

5. Verbindungselement nach mindestens einem der Ansprüche 1 bis 4,
**dadurch gekennzeichnet, dass** der Hochflansch (HF) mindestens ein Schraubloch (102, 103, 202, 302) aufweist.
